**Europäisches Patentamt**

**European Patent Office**

**Office européen des brevets**

(11) Veröffentlichungsnummer: **0 203 213**

**B1**

# EUROPÄISCHE PATENTSCHRIFT

(45) Veröffentlichungstag der Patentschrift:
**10.08.88**

(21) Anmeldenummer: **85106540.9**

(22) Anmeldetag: **29.05.85**

(51) Int. Cl.⁴: **F 28 F 21/02,** F 28 F 21/06, C 08 K 3/04, F 28 F 3/08, F 28 F 3/10

(54) **Verfahren zur Herstellung eines Plattenwärmeaustauschers.**

(43) Veröffentlichungstag der Anmeldung:
**03.12.86 Patentblatt 86/49**

(45) Bekanntmachung des Hinweises auf die Patenterteilung:
**10.08.88 Patentblatt 88/32**

(84) Benannte Vertragsstaaten:
**BE CH DE FR GB IT LI NL SE**

(56) Entgegenhaltungen:
**DE-A-2 406 522**
**DE-A-2 705 807**
**DE-B-1 796 279**
**FR-A-1 055 271**
**FR-A-2 080 563**
**FR-A-2 096 678**
**FR-A-2 130 577**
**FR-A-2 373 025**
**FR-A-2 463 377**
**US-A-2 939 686**
**US-A-3 265 124**
**US-A-3 291 206**
**US-A-3 391 016**
**US-A-3 444 925**
**US-A-3 801 374**
**US-A-4 339 322**
**US-A-4 407 988**
**US-A-4 432 408**

(73) Patentinhaber: **SIGRI GmbH, Werner- von- Siemens-Strasse 18, D-8901 Meitingen (DE)**

(72) Erfinder: **Künzel, Jürgen, Dr. Dipl.- Ing., Hochweg 37, D-8851 Thierhaupten (DE)**
Erfinder: **Schmid, Manfred, Blumenstrasse 10, D-8901 Langweid/Lech 2 (DE)**
Erfinder: **Swozil, Adolf, Dipl.- Ing. (FH), Schlossbergweg 9, D-8851 Kühlenthal (DE)**
Erfinder: **Ullmann, Gerhard, Dipl.- Ing., Jean-Bareth- Strasse 9, D-6080 Gross- Gerau (DE)**

## Beschreibung

Gegenstand der Erfindung ist ein Verfahren zur Herstellung eines Plattenwärmeaustauschers, der wenigstens drei parallele, aus Graphit und einem Fluoropolymen bestehende, im Abstand angeordnete, aus einer Platte und einem diese Platte umschließenden Rahmen bestehende Plattenelemente und Vorrichtungen zur Zu- und Ableitung wärmeaustauschender Fluide, die den Plattenwärmeaustauscher zwischen jeweils zwei Platten durchströmen, enthält.

Nach dem Prinzip der Filterpressen ausgelegte Plattenwärmeaustauscher bestehen wenigstens aus drei, im allgemeinen aus einer Vielzahl von mit Kanälen versehenen Platten, die im Abstand angeordnet zu einem Stapel vereinigt sind. Der Stapel und jede Platte ist mit Mitteln zur Zu- und Ableitung der wärmeaustauschenden Fluide versehen, die die Zwischenräume zwischen den Platten durchströmen. Der Abstand zwischen benachbarten Platten wird durch Abstandshalter festgelegt, die zwischen jeweils zwei Platten eingelegt sind. Vorteilhaft sind die Abstandshalter an die Ränder der Platten angeformt, z. B. durch Tiefziehen (DE-U-82 08 878) und es ist auch bekannt, in die Ebene der Platten stabilitätserhöhende und die Verteilung der Fluide verbessernde Sicken, Waffelungen und andere Oberflächenstrukturen einzubringen. Die Sicken können so tief aus dem Material ausgeformt sein, daß sie die benachbarten Platten berühren und somit mittragen. Diese Maßnahme erlaubt die Verwendung sehr dünner Platten, vor allem aus Blechen und Folien und auch aus thermoplastischen Kunststoffen. Platten aus thermoplastischen Kunststoffen sind einfach herzustellen und im allgemeinen beständiger gegen korrosive Medien als Metalle. Besonders trifft das auf Fluoropolymere zu. Bekannt ist beispielsweise ein Plattenwärmeaustauscher aus Polytetrafluoroethylen (PTFE), der eine Vielzahl von Platten mit Kanälen und besonderen Austauschwänden enthält (FR-A-2 373 025). Da die Wärmeleitfähigkeit von PTFE vergleichsweise klein ist wurde vorgeschlagen, Graphitpulver in den Fluoropolymeren einzuarbeiten (FR-A-2 080 563). Derartige Platten enthalten etwa 80 % PTFE und nur 20 % Graphit (FR-A-1 055 271), so daß die Verbesserung der Wärmeleitfähigkeit vergleichsweise beschränkt ist. Wärmeaustauscherwände mit einem Graphitanteil bis 90 % sind durch die DE-A-2 705 807 bekannt, der Binder oder Matrix der Platten besteht jedoch aus duroplastischen Harzen, wie Phenolharze, Epoxidharze und Furanharze, deren Korrosionsbeständigkeit kleiner ist als die Beständigkeit von Fluoropolymeren. Fluoropolymere haben andererseits eine geringere Steifigkeit und höhere Kriechraten. Zur Verbesserung dieser Eigenschaften ist vorgeschlagen worden, Kohlenstoffasern in Polyvinylidenfluorid (PVDF) einzumischen, wobei aber Faseranteile über 30 % die Fließfähigkeit des Gemischs derartig vermindern, daß die Verarbeitung mit normalen Formverfahren nicht mehr möglich ist (GB-A-1 324 424). Schließlich ist ein Verfahren zur Herstellung von Körpern bekannt, bei welchem expandierten Graphit und korrosionsbeständige Harze, wie PVDF, enthaltende Gemische verpreßt werden (US-A-4 199 628). Die Graphitpartikel werden dabei im wesentlichen in Ebenen senkrecht zur Preßrichtung angeordnet, die herstellungsbedingt bei Plattenwärmeaustauschern die Richtung des Wärmeflusses ist. Wegen der Anisotropie der Graphitflocken erhält man dadurch zwangsläufig Platten mit einem hohen Wärmewiderstand in Richtung des Wärmeflusses und entsprechend Wärmeaustauscher mit einer schlechten Übertragungskapazität. Man verwendet derartige Formlinge daher ausschließlich als korrosionsfeste Auskleidungen und ähnliches. Schließlich ist eine wärmeaustauschende Platte für Brennstoffzellen bekannt, die aus 85 bis 95 % Graphitpulver und 5 bis 15 % PVDF besteht (US-A-3 801 374). Zur Herstellung der Platten wird PVDF in einem Lösemittel, wie Methylisobutylketon, gelöst, und die Lösung mit Graphitpulver gemischt. Vor dem Pressen muß das Lösemittel entfernt werden, wodurch große Aufwendungen zur Vermeidung umweltschädlicher Emissionen entstehen. Es ist auch nicht bekannt, welche Wärmeleitfähigkeit die nach diesem Verfahren hergestellten Platten haben.

Der Erfindung liegt die Aufgabe zugrunde, ein Verfahren zur Herstellung eines Plattenwärmeaustauschers der eingangs genannten Art zu schaffen, dessen Plattenelemente einfach ohne Umweltbelastung herzustellen sind und einen kleinen Wärmewiderstand haben.

Die Aufgabe wird mit einem Verfahren der eingangs genannten Art dadurch gelöst, daß

a) Graphitpulver mit einer Korngröße unter 0,5 mm mit einem pulverförmigen Fluoropolymeren mit einer Korngröße unter 0,001 mm im Verhältnis 95 : 5 bis 70 : 30 bei einer Temperatur zwischen 200 und 350°C gemischt,

b) das Gemisch nach Abkühlung auf Raumtemperatur auf eine Korngröße unter 0,3 mm gemahlen und

c) das Mahlgut bei einer Temperatur von wenigstens 200°C mit einem Druck von mindestens 200 bar zu Plattenelementen gepreßt wird und

d) die Plattenelemente zu einem Wärmetauscher zusammengefügt und zwischen den planen Flächen benachbarter Rahmen flexible Flachdichtungen angeordnet werden.

Platten dieser Zusammensetzung lassen sich in sehr geringer Dicke herstellen; sie haben eine wesentlich kleinere Sprödigkeit als Platten, die ausschließlich aus Graphit bestehen und die reversible und irreversible Formänderung ist erheblich kleiner als die Längen- und Volumenänderungen von Platten, die aus Kunststoffen und gefüllten Kunststoffen hergestellt sind. Die für Plattenwärmeaustauscher günstigen Werkstoffeigenschaften sind offensichtlich darauf zurückzuführen, daß das Fluoropolymere die einzelnen Graphitkörner in Form dünner Filme umschließt und miteinander verbindet und diese Verbindung eine große Scherfestigkeit aufweist. Als Binder geeignet sind besonders thermoplastische verarbeitbare Fluoropolymere, wie Copolymerisate des Tetrafluorethylens oder Trifluorchlorethylens, Polyvinylfluorid und Polyvinylidenfluorid, das wegen seiner einfachen Verarbeitbarkeit im Gemisch mit Graphitpulver als Binder bevorzugt wird.

Die mechanischen und thermischen Eigenschaften der aus Graphitpulver und einem Binder aus der Gruppe der Fluoropolymeren hergestellten Platten können in weiten Grenzen etwa durch Änderung des Binderanteils oder eines anderen Herstellungsparameters den jeweiligen Betriebsbedingungen angepaßt werden. Besonders vorteilhaft sind Platten mit einer Rohdichte von 2,0 bis 2,1 g/cm$^3$ und einer Zugfestigkeit von 20 bis 40 MPa. Platten dieser Art haben einen breiten Anwendungsbereich und auch als großflächige Elemente eine ausreichende Steifigkeit. Unter besonderen Betriebsbedingungen, z. B. hoher Feststoffbelastung der wärmetauschenden Fluide, kann u.U. die Abriebgeschwindigkeit der Platten wegen der geringen Härte des Graphits auf einen höheren Betrag steigen. Zur Verringerung des Verschleißes ist es unter diesen Bedingungen von Vorteil, Platten zu verwenden, in denen in bekannter Weise verschleißfeste Partikel dispergiert sind. Der Anteil der Partikel richtet sich nach der abrasiven Belastung der Platten, die Korngröße der Partikel ist zweckmäßig kleiner als die halbe Dicke der wärmetäuschenden Platten. Besonders geeignet sind Partikel aus Siliciumcarbid, die bei großer Härte und günstiger Wärmeleitfähigkeit die Korrosionsfestigkeit der Platten kaum beeinträchtigen und daher mit einem Gewichtsanteil bis 50 % in dem Element enthalten sein können. Bei besonders starkem Korrosionsangriff sind Zusätze von Kokspartikeln vorzuziehen. Für Wärmeaustauscher, die bei größeren Drücken betrieben oder mechanisch stärker belastet werden, sind Platten von Vorteil, die Kohlenstoffasern als Verstärkung enthalten, zweckmäßig als Kurzschnittfasern in einer Konzentration von 2 bis 20 %. Die Verstärkung der im wesentlichen aus einem Fluoropolymeren und Graphitpartikeln bestehenden Rahmen bipolärer Elektrodenanordnungen in elektrochemischen Zellen mit statistisch verteilten Kohlenstoffasern ist bekannt (US-A-4 339 322). Da die Faserverstärkung in den ebenen Bereichen der Plattenelemente besonders wirksam ist, sollten die Fasern im Rahmen und in den Zu- und Ableitungsbereichen der Platten angereichert werden.

Ein wichtiger Parameter für die Austauschleistung von Wärmeaustauschern ist die Geschwindigkeitsverteilung der Fluide zwischen den wärmeaustauschenden Flächen. Zur Regelung der Fluidströmung werden die Platten bevorzugt mit Noppen versehen, die in einem vorgegebenen Raster angeordnet sind, gehäuft in den Zulaufbereichen der Fluide. Sie erstrecken sich beispielsweise in Reihen quer zur Strömungsrichtung der Fluide. Zweckmäßig berühren die kegelstumpfförmigen Noppen die benachbarten Platten wodurch eine zusätzliche Versteifung des Plattenstapels erzielt wird. Versteift werden die Platten bei einer anderen Ausführungsform durch flächenhafte Kohlenstoffasergebilde, wie Gewebe, Bänder oder Prepreglagen mit unidirektional oder bidirektional angeordneten Kohlenstoffäden. Die flächenhaften Fasergebilde werden auf die Oberfläche der Platten, beispielsweise mit geschmolzenen Polyvinylidenfluorid aufgeklebt oder bei der Herstellung der Elemente in diese eingepreßt. Versteift werden zweckmäßig die ebenen Bereiche einer Platte, von denen auch die Verteilernoppen ausgehen.

Zwischen den Rahmen von jeweils zwei Platten werden Dichtungen aus einem flexiblen und korrosionsbeständigen Werkstoff eingelagert, z. B. Dichtungen aus einem Fluoropolymeren. Bevorzugt werden Dichtungen aus Graphitfolie, deren Kaltfluß kleiner ist. Die aus expandiertem Graphit hergestellten Dichtungen, deren Rohdichte etwa 0,8 bis 1,2 g/cm$^3$ beträgt, werden beim Zusammenspannen des Plattenstapels zweckmäßig auf eine Dicke von 0,1 bis 0,3 mm zusammengepreßt. Die Lösbarkeit der Dichtungen vom Rahmen der Platte wird durch eine Beschichtung mit einem Fluoropolymeren erleichtert, z. B. mit Dispersionen, die Tetrafluorethylen-Copolymere enthalten, die auf die Dichtungsflächen aufgetragen wird.

Die beanspruchten Plattenwärmeaustauscher weisen die vorzügliche Beständigkeit des Graphits gegen korrosiv wirkende Stoffe auf, nicht aber dessen Sprödigkeit, durch die die Herstellung und Verwendung dünnwandiger Elemente im technischen Maßstab praktisch nicht möglich ist.

Die Zeitstandsfestigkeit der Platten ist nicht begrenzt, wie bei Wärmeaustauschern, die ausschließlich aus Polymeren bestehen. Andere Vorteile sind die größere Wärmeleitfähigkeit und die einfache Anpassung von Gestalt und Eigenschaften an den jeweiligen Verwendungszweck durch Zusätze körniger oder faseriger Stoffe.

Zur Herstellung der Plattenelemente wird Graphitpulver mit einer Korngröße unter 0,5 mm mit einem pulverförmigen Fluoropolymeren mit einer Korngröße unter 0,001 mm im Verhältnis 95 : 5 bis 70 : 30 bei einer Temperatur zwischen 200 und 350° C gemischt. Die Graphitkomponente der Mischung besteht aus natürlichem Graphit, wie Flockengraphit oder erdigem Graphit, oder Elektrographit, der durch Graphitieren von Petrolkoks, Nadelkoks oder Steinkohlenteerpechkoks gewonnen wird. In bekannter Weise werden zweckmäßig zur Einstellung einer bestimmten Packungsdichte mehrere Kornfraktionen zusammengemischt. z. B. Franktionen von 0 bis 0,063, 0,063 bis 0,1 und 0,1 bis 0,3 mm. Nach Abkühlung auf Raumtemperatur werden die beim Mischen gebildeten Aggregate auf eine Korngröße unter 0,3 mm aufgemahlen. Das Mahlgut wird dann, gegebenenfalls nach Zusatz eines Preßhilfsmittels, wie Stearinsäure oder einer Metallseife, in ein Preßgesenk gefüllt, in das ein Kern eingelegt ist. Der Kern ist wie der Preßstempel profiliert und der Abstand zwischen Gesenkfläche und Kern an jedem Ort der Dicke der gepreßten Plattenelemente proportional. Beträgt z. B. das Verhältnis der Rahmenhöhe zur Dicke der wärmeaustauschenden Fläche 4 : 1, so sind Gesenk und Kern an den entsprechenden Orten ebenfalls im Verhältnis 4 : 1 voneinander entfernt. Die zwischen Gesenk und Kern gefüllte Pulverschicht ist entsprechend in den Randzonen viermal dicker als in der Mitte, so daß beim Pressen auf das Fertigmaß das Pulver an jeder Stelle um den gleichen Betrag verdichtet wird. Der Preßdruck beträgt wenigstens 200 bar, die Preßtemperatur wenigstens 200°C. Beim Pressen werden Rahmen, wärmeaustauschende Flächen und etwa zur Lenkung der Fluidströmung vorgesehene Noppen und dergleichen stoffschlüssig miteinander verbunden.

Die Erfindung wird im folgenden anhand von Zeichnungen und Beispielen näher erläutert. Es zeigen

Fig. 1      die schematische Darstellung eines Plattenwärmeaustauschers,

Fig. 2      ein Plattenelement im Aufriß,

Fig. 3      Schnitt durch einen, mehrere Plattenelemente enthaltenden Stapel.

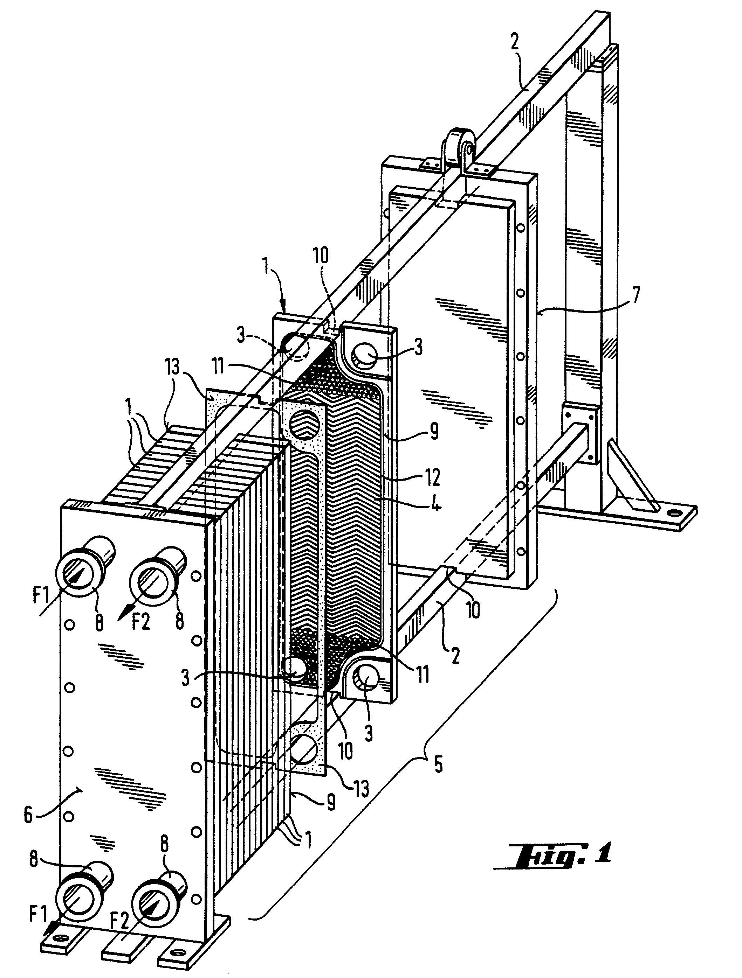

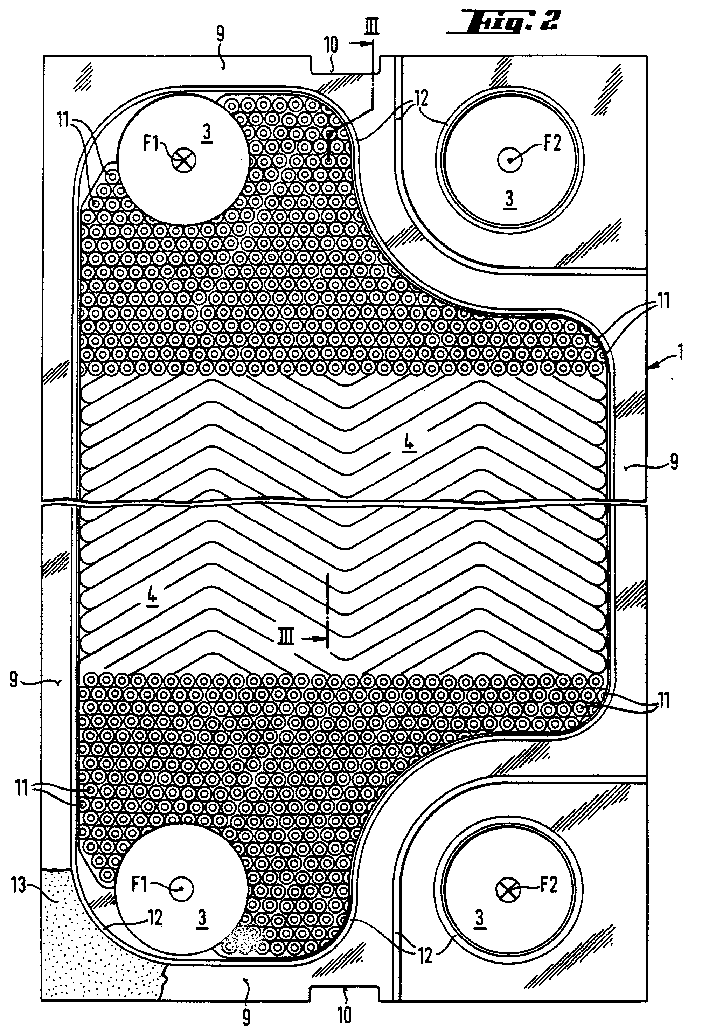

In Fig. 1 sind Plattenelemente 1 verschiebbar zwischen dem Rahmenwerk 2 angeordnet. Jedes Plattenelement ist mit Durchbrechungen 3 versehen, durch welche wärmeaustauschende Fluide dem gewellten Teil 4 der Platte zugeführt werden. Mehrere Elemente sind zu einem Plattenwärmeaustauscher 5 zusammengefaßt, der durch die Stirnplatte 6 und die Rückenplatte 7 abgeschlossen ist. In die Stirnplatte 6 sind fluchtend mit den Durchbrechungen 3 Stutzen 8 eingelassen, über die wärmeaustauschende Fluide $F_1$, $F_2$ zugeführt und abgeführt werden. Platten, Stirn- und Rückenplatte sind durch zeichnerisch nicht dargestellte Zugstangen zusammengespannt. Jedes Plattenelement besteht, wie in Fig. 2 dargestellt, aus einem Rahmen 9 und einem von dem Rahmen umschlossenen gewellten Teil 4. In den Rahmen sind zur Führung im Rahmenwerk 2 (Fig. 1) Nuten 10 eingelassen und zur Lenkung des Fluidflusses sind zwischen den Durchbrechungen 3 und dem gewellten Teil 4 Noppen 11 angeordnet. Die Wülste 12 dienen ebenfalls der Fluidverteilung.

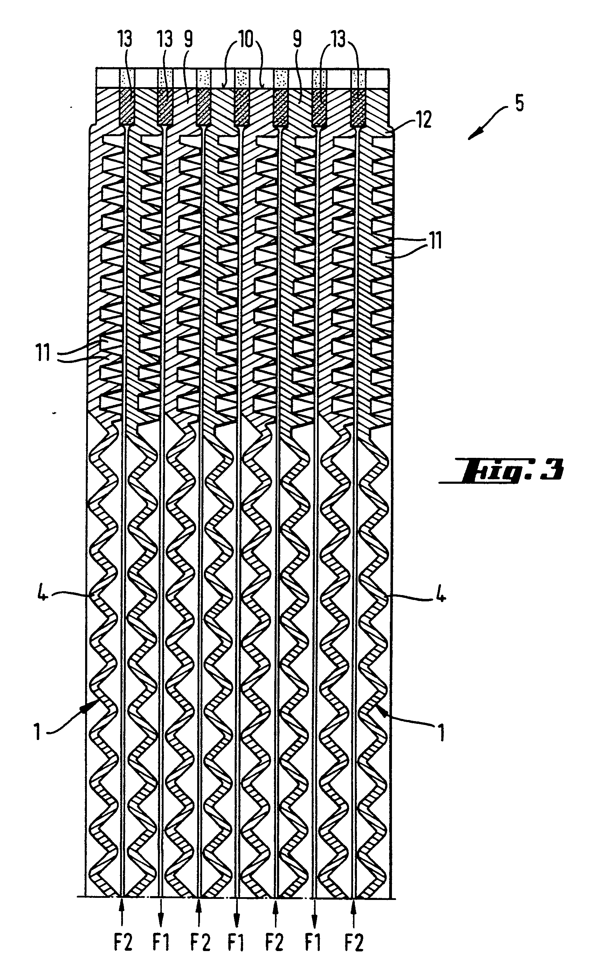

Wie in Fig. 3 dargestellt, ist zwischen benachbartem Rahmen 9 jeweils eine Flachdichtung 13 eingelegt, die aus einem flexiblen korrosionsbeständigen Werkstoff, besonders aus Graphitfolie besteht.

**Beispiel 1**

In einem Trogmischer mit Sigma-Mischwerkzeugen werden 80 Teile Elektrographitpulver - 60 % 60 bis 200 Mikrometer, 40 % < 60 Mikrometer - mit 20 Teilen Polyvinylidenfluoridpulver gemischt, dessen Korngröße kleiner als 1 Mikrometer war. Die Mischtemperatur betrug 220°C, die Mischzeit eine Stunde. Nach Abkühlen auf Raumtemperatur wurde das Mischgut auf einer Stiftmühle auf eine Körnung <, 0,3 mm gemahlen, wie oben beschrieben in eine Preßform gefüllt und zu einem integrierten Plattenelement verpreßt; Preßdruck 400 bar, Temperatur 270°C, Haltezeit 10 min. Es wurden folgende Stoffgrößen gemessen:

Rohdichte - 2,02 g/cm³
Biegefestigkeit - 50 MPa
Zugfestigkeit - 30 MPa
Wärmeleitfähigkeit 25 W/m.K
Permeabilitätskoeffizient $3.10^{-6}$ cm²/s

Siebzehn Plattenelemente wurden wie in Fig. 1 dargestellt mit einer Stirnplatte und einer Rückenplatte zusammengespannt, wobei zwischen benachbarten Rahmen jeweils eine 0,3 mm dicke Flachdichtung eingelegt war. Der Plattenwärmeaustauscher wurde zur Kühlung von verdünnter Salzsäure (etwa 20 % HCl) verwendet, die durch organische Lösungsmittel verunreinigt war. Die Fluidtemperaturen betrugen Säureeintritt - 116°C, Säureaustritt - 52°C, Kühlwassereintritt 7°C, Kühlwasseraustritt - 40 C. Die Wärmeübergangszahl betrug 2000 bis 3000 W/m.K, Korrosionsschäden und Undichtigkeiten bei 3,5 bar - Betriebsdruck gab es nicht.

**Patentansprüche**

1. Verfahren zur Herstellung eines Plattenwärmeaustauschers, der wenigstens drei parallele, aus Graphit und einem Fluoropolymeren bestehende, im Abstand angeordnete, aus einer Platte und einem diese Platte umschließenden Rahmen bestehende Plattenelemente und Vorrichtungen zur Zu- und Ableitung wärmeaustauschender Fluide, die den Plattenwärmeaustauscher zwischen jeweils zwei Platten durchströmen, enthält, dadurch gekennzeichnet, daß

a)      Graphitpulver mit einer Korngröße unter 0,5 mm mit einem pulverförmigen Fluoropolymeren mit einer Korngröße unter 0,001 mm im Verhältnis 95 : 5 bis 70 : 30 bei einer Temperatur zwischen 200 und 350°C gemischt,

b) das Gemisch nach Abkühlung auf Raumtemperatur auf eine Korngröße unter 0,3 mm gemahlen und

c) das Mahlgut bei einer Temperatur von wenigstens 200°C mit einem Druck von mindestens 200 bar zu Plattenelementen gepreßt wird und

d) die Plattenelemente zu einem Wärmetauscher zusammengefügt und zwischen den planen Flächen benachbarter Rahmen flexible Flachdichtungen angeordnet werden.

2. Verfahren nach Patentanspruch 1, dadurch gekennzeichnet, daß die aus Platte und Rahmen bestehenden Elemente des Wärmeaustauschers aus einem Graphitpulver und pulverförmiges Polyvinylidenfluorid enthaltenden Gemisch gepreßt werden.

3. Verfahren nach den Patentansprüchen 1 bis 2, dadurch gekennzeichnet, daß die Platten wenigstens zu einem Teil durch flächenhafte Kohlenstoffasergebilde verstärkt werden.

4. Verfahren nach den Patentansprüchen 1 bis 3, dadurch gekennzeichnet, daß zwischen die Rahmen benachbarter Platten Dichtungen aus Graphitfolie mit einer Dicke von 0,1 bis 0,3 mm eingelegt werden.

## Claims

1. Process for the production of a plate heat exchanger which contains at least three parallel plate elements consisting of graphite and a fluoropolymer arranged spaced apart, consisting of a plate and a frame surrounding this plate, and with means for the supply and removal of heat exchanging fluids which flow through the plate heat exchanger between respective pairs of plates, characterised in that

a) graphite powder with a particle size below 0.5 mm is mixed with a pulverous fluoropolymer with a particle size below 0.001 mm in the ratio 95 : 5 to 70 : 30 at a temperature between 200 and 350°C,

b) the mixture is comminuted to a particle size below 0.3 mm after cooling to room temperature and

c) the comminuted material is pressed to plate elements at a temperature of at least 200°C with a pressure of at least 200 bar and

d) the plate elements are assembled to a heat exchanger and flexible flat seals are arranged between the flat surfaces of neighbouring frames.

2. Process according to claim 1, characterised in that the elements composed of plates and frames of the heat exchanger are pressed from a mixture containing graphite powder and pulverous polyvinylidenefluoride.

3. Process according to claims 1 to 2, characterised in that the plates are reinforced at least in part by laminar carbon fibre formations.

4. Process according to claims 1 to 3, characterised in that seals of graphite foil with a thickness of 0.1 to 0.3 mm are inserted between the frames of neighbouring plates.

## Revendications

1. Procédé pour la fabrication d'un échangeur de chaleur à plaques, qui comprend au moins trois éléments de plaques parallèles, composés d'un cadre en graphite en polymère fluoré, disposés à distance, une plaque et un cadre entourant cette plaque et des dispositifs pour l'amenée et l'évacuation du fluide échangeant la chaleur, qui s'écoulent chacun entre deux plaques de l'échangeur, caractérisé en ce que:

a) de la poudre de graphite ayant une granuolométrie inférieure à 0,5 mm, et un polymère fluoré en poudre, ayant une granulométrie inférieure à 0,001 mm sont mélangés dans un rapport de 95 : 5 à 70 : 30, pour une température comprise entre 200 et 350°C,

b) après refroidissement à la température ambiante, le mélange est moulu à une granulométrie inférieure à 0,3 mm,

c) la mouture est pressée en éléments de plaques, à une température d'au moins 200°C, avec une pression d'au moins 200 bars,

d) les éléments de plaques sont assemblés en un échangeur de chaleur et des joints d'étanchéité plats flexibles sont disposés entre les faces planes du cadre voisin.

2. Procédé selon la revendication 1, caractérisé en ce que l'élément d'échangeur de chaleur, se composant d'une plaque et de cadres est pressé à partir d'un mélange contenant de la poudre de graphite et du fluorure de polyvinylide, en poudre.

3. Procédé selon les revendications 1 à 2, caractérisé en ce que les plaques sont renforcées au moins en une partie, par des configurations plates de fibres de carbone.

4. Procédé selon les revendications 1 à 3, caractérisé en ce que des joints d'étanchéité en feuille de graphite, d'une épaisseur allant de 0,1 à 0,3 mm sont insérés entre les cadres des plaques voisines.

**Fig. 1**

**Fig. 2**

Fig. 3